# EUROPÄISCHE PATENTSCHRIFT

(11) **EP 2 209 184 B1**
(45) Veröffentlichungstag und Bekanntmachung des Hinweises auf die Patenterteilung: **23.03.2016**
(21) Anmeldenummer: 09000401.1
(22) Anmeldetag: 14.01.2009
(51) Int. Cl.: H02K 1/27, H02K 1/02, H02K 7/08, H02K 5/128

(54) **Rotor aus Magnetmaterial**
Magnetic rotor
Rotor en matériau magnétique

(43) Veröffentlichungstag der Anmeldung: 21.07.2010
(73) Patentinhaber: Grundfos Management A/S, 8850 Bjerringbro (DK)
(72) Erfinder: Grann, Helge, 8850 Bjerringbro (DK); Staehr, Uffe, 8382 Hinnerup (DK); Kjaer, Oluf, 8850 Bjerringbro (DK)
(74) Vertreter: Hemmer, Arnd

(56) Entgegenhaltungen:
- EP-A- 0 523 353
- EP-A- 0 579 560
- EP-A- 1 281 881
- EP-A- 1 496 277
- EP-A- 1 705 259
- EP-A- 1 719 916
- EP-A- 1 843 449
- EP-A- 1 903 229
- WO-A-2004/113670
- WO-A-2008/081650
- WO-A2-2005/092813
- AU-A- 2 362 670
- DE-A1- 10 006 426
- US-A- 6 145 941
- US-A1- 2004 016 239
- NAVINSEK B ET AL: "Industrial applications of CrN (PVD) coatings, deposited at high and low temperatures", SURFACE AND COATINGS TECHNOLOGY, ELSEVIER, AMSTERDAM, NL, vol. 97, no. 1-3, 1 December 1997 (1997-12-01), pages 182-191, XP027367640, ISSN: 0257-8972 [retrieved on 1997-12-01]

## Beschreibung

Die Erfindung betrifft einen Rotor aus Magnetmaterial.

In Elektromotoren werden Rotoren verwendet, welche magnetische Eigenschaften aufweisen müssen. Dazu ist es bekannt für Permanentmagnetmotoren Permanentmagnete in einen Rotor einzubetten. Darüber hinaus ist es aus EP 17 199 16 A1 bekannt, den Rotor wellenlos und vollständig aus Magnetmaterial auszubilden, wobei dann die einzelnen Magnete des Rotors durch entsprechende Magnetisierung des Magnetmaterials in dem Rotor ausgebildet werden.

Der Rotor muss in dem Elektromotor in axialer und radialer Richtung gelagert werden. Dabei müssen von den Lagern ggf. nicht nur die von dem Rotor selber erzeugten Kräfte, sondern auch noch äußere Kräfte, welche von an den Rotor angeschlossenen Elementen auf den Rotor übertragen werden, von den Lagern aufgenommen werden. Beispielsweise in einem Pumpenaggregat kann es sein, dass die von dem Laufrad verursachten Axialkräfte und auch die auf das Laufrad wirkenden Radialkräfte direkt auf den Rotor des Elektromotors übertragen werden und von dessen Lagerung aufgenommen werden müssen.

Bei einem vollständig aus Magnetmaterial ausgebildeten Rotor ist es unter Umständen schwierig, die Lager ausreichend stark zu dimensionieren, um die auftretenden Kräfte aufnehmen zu können. Daher ist es aus EP 17 199 16 A1 bekannt, in das Magnetmaterial zusätzliche Lagerhülsen einzubetten. Dies ist jedoch mit einem größeren Fertigungs- bzw. Montageaufwand verbunden.

Es ist daher Aufgabe der Erfindung, einen vereinfachten Rotor aus Magnetmaterial bereitzustellen, welcher kostengünstig zu fertigen ist und darüber hinaus eine ausreichend stabile Lagerung ermöglicht.

Diese Aufgabe wird durch einen Rotor aus Magnetmaterial mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Der erfindungsgemäße Rotor besteht aus einem Magnetmaterial. In dem Magnetmaterial können durch Magnetisierung einzelne Rotorpole ausgebildet sein. Um die Verschleißfestigkeit zumindest in einzelnen Abschnitten, beispielsweise den Bereichen, welche als Lager dienen, zu erhöhen, ist zumindest ein Oberflächenabschnitt des Magnetmaterials mit einer verschleißfesten Beschichtung versehen. D. h. auf diesen Oberflächenabschnitt ist eine dünne Schicht aus einem anderen Material aufgebracht, welche die gewünschte Verschleißfestigkeit und ggf. Härte aufweist. Die Beschichtung kann durch ein geeignetes Verfahren, beispielsweise PVD (physical vapour deposition), CVD (chemical vapour deposition) Ionenstrahlbeschichten (IBAD, ion beam assisted deposition) oder PCVD (plasma chemical vapour deposition) auf das Magnetmaterial aufgebracht werden. Die verschleißfeste Beschichtung gibt dem Oberflächenabschnitt des Magnetmaterials die erforderlichen verschleißfesten Eigenschaften, sodass dieser Oberflächenabschnitt beispielsweise der Lagerung des Rotors dienen kann. Die Beschichtung ist dabei deutlich härter und/oder verschleißfester als das Magnetmaterial selber, beispielsweise wenn es sich um ein Ferritmaterial handelt, welches nicht die gewünschten Eigenschaften aufweist.

Gemäß einer bevorzugten Ausführungsform ist der Rotor vollständig aus dem Magnetmaterial gefertigt. D. h. besonders bevorzugt weist der Rotor keine separate Rotorwelle auf, sondern ist einstückig aus dem Magnetmaterial gefertigt. Die Pole des Rotors werden dann durch entsprechende Magnetisierung von Abschnitten in dem Magnetmaterial ausgebildet. Erfindungsgemäß wird der gesamte Rotor oder es werden ein oder mehrere Oberflächenabschnitte des Rotors dann mit einer verschleißfesten Beschichtung versehen. Dies können Oberflächenabschnitte sein, welche als Lager dienen. Alternativ können auch andere Oberflächenabschnitte oder der gesamte Rotor mit einer verschleißfesten Beschichtung versehen werden, beispielsweise wenn der Rotor mit einem aggressiven oder abrasiven Medium in Kontakt kommt. Bei der erfindungsgemäßen Beschichtung liegt der Vorteil darin, dass keine separaten Lagerschalen oder Lagerelemente an oder in dem Rotor montiert bzw. integriert werden müssen, wodurch die Fertigung deutlich vereinfacht und kostengünstiger wird. Darüber hinaus kann der Anteil von Magnetmaterial in dem Rotor, wenn auf separate Lagerschalen verzichtet wird, maximiert werden, wodurch die magnetischen Eigenschaften des Rotors verbessert werden können und der Wirkungsgrad gesteigert werden kann.

Erfindungsgemäß ist der Rotor Teil eines Elektromotors und bevorzugt eines elektrischen Antriebsmotors eines Pumpenaggregates. Gerade bei Pumpenaggregaten, beispielsweise Heizungsumwälzpumpenaggregaten, welche in größerer Stückzahl gefertigt werden, ist es interessant den Rotor auf möglichst einfache Weise fertigen zu können. Gleichzeitig kommt es bei derartigen Pumpen, welche häufig im Dauerbetrieb laufen, darauf an, den Wirkungsgrad zu maximieren, um den Energieverbrauch gering zu halten. Daher ist es erstrebenswert, die magnetischen Eigenschaften des Rotors möglichst zu optimieren.

Die Beschichtung ist vorzugsweise aus DLC (diamond-like carbon), d. h. diamantähnlichen Kohlenstoff, CrN (Chromnitrid) und/oder TiAlN (Titanaluminiumnitrid) gebildet. Bei der DLC-Beschichtung kann es sich um tetraedisch amorphen Kohlenstoff (ta-C), eine wasserstoffhaltige amorphe Kohlenstoffschicht (amophous hydrogenated carbon (a-C:H) oder eine tetraedische wasserstoffhaltige amorphe Kohlenstoffschicht (tetrahedral-bonded-hydrogen-containing amorphous carbon, ta-C:H) handeln. Diese Beschichtungswerkstoffe können allein oder in Kombination aufgebracht sein, um die verschleißfeste Beschichtung des Magnetmaterials zu bilden. Es können jedoch auch andere geeignete Beschichtungswerkstoffe allein oder in Kombination, insbesondere auch mit einem der vorgenannten Werkstoffe, zum Einsatz kommen. Die Auswahl des Beschichtungswerkstoffes hängt zum einen mit den gewünschten Eigenschaften der Beschichtung, insbesondere der gewünschten Verschleißfestigkeit, andererseits auch von dem Magnetmaterial ab, um eine feste Verbindung zwischen Beschichtung und Magnetmaterial zu ermöglichen.

Erfindungsgemäß ist die Beschichtung zumindest zweischichtig ausgebildet. Durch eine solche Ausgestaltung kann eine besondere Verschleißfestigkeit realisiert werden. Ferner ist es auch möglich, die Bindung zwischen der Beschichtung und dem Magnetwerkstoff zu verbessern. Die für Rotoren üblicherweise verwendeten Magnetmaterialien, beispielsweise Ferrit, lassen sich nicht ohne weiteres mit einer üblichen verschleißfesten Beschichtung versehen. Dieses Problem kann durch einen mehrschichtigen Aufbau der Beschichtung gelöst werden. Beispielsweise kann zunächst eine Schicht aufgebracht werden, welche sich gut mit dem Magnetmaterial verbindet und gleichzeitig ein geeignetes Trägermaterial für die aufzubringende verschleißfeste Schicht ist. So kann diese erste Schicht eine Bindung zwischen dem Magnetmaterial und der eigentlichen verschleißfesten Schicht erreichen. Ferner kann die Schicht auch den Beschichtungsprozess verbessern. So ist die erste aufgebrachte Schicht elektrisch leitfähig, sodass diese Schicht dann die weitere Beschichtung mit dem verschleißfesten Material in herkömmlicher Art und Weise, z. B. im

PVD-Verfahren, ermöglicht. Auf diese Weise kann auch die Beschichtung des nicht elektrisch leitfähigen Magnetmaterials erfolgen.

Während die innere, direkt auf das Magnetmaterial aufgebrachte Schicht, somit elektrisch leitfähig ist, ist die äußere Schicht der Beschichtung aus einem hoch verschleißfesten Material mit weiter bevorzugt geringer Reibung ausgebildet. Diese Schicht bildet dann beispielsweise eine Schicht, welche ideal für den Lagerbereich des Rotors ist, d. h. den Bereich, in welchem der Rotor in radialer und/oder axialer Richtung gelagert wird. Eine solche hoch verschleißfeste Schicht bildet auch ein geeignetes Gegenstück für umgebende harte Lagerschalen, welche beispielsweise aus Al₂O₃ gefertigt sind. Auf diese Weise können Lagerpaarungen erzielt werden, welche zum einen hoch verschleißfest und daher sehr haltbar sind und zum anderen große Kräfte aufnehmen können.

Besonders bevorzugt ist die Beschichtung dreischichtig mit einer mittleren Tragschicht ausgebildet. So kann die innere Schicht, wie oben beschrieben, bevorzugt elektrisch leitfähig sein und so zunächst einmal die grundsätzliche Beschichtungsfähigkeit des nicht elektrisch leitfähigen Magnetmaterials herstellen. Die anschließend auf die innere Schicht aufgebrachte mittlere Schicht bildet eine Träger- bzw. Bindeschicht, welche die Bindung zwischen der elektrisch leitfähigen inneren Schicht und der anschließend aufzubringenden äußeren Schicht herstellt. Die äußere Schicht ist dann, wie vorangehend beschrieben, aus einem hoch verschleißfesten Material mit vorzugsweiser geringer Reibung ausgebildet.

Die innere Schicht ist vorzugsweise zumindest teilweise aus CrN oder einem korrosionsfesten Metall gebildet. Eine solche Schicht ist elektrisch leitfähig und ermöglicht die Beschichtung beispielsweise im PVD-Verfahren, um dann weitere Schichten, insbesondere die hoch verschleißfeste äußere Schicht aufzubringen.

Die äußere Schicht ist bevorzugt zumindest teilweise aus DLC, CrN oder TiAlN gebildet. Dies sind Werkstoffe, welche eine hohe Verschleißfestigkeit aufweisen.

Wie vorangehend beschrieben ist vorzugsweise zumindest ein Abschnitt des Rotors, welcher eine Lagerfläche bildet, mit einer Beschichtung gemäß der vorangehenden Beschreibung versehen. Weiter bevorzugt kann auch der gesamte Rotor in dieser Weise beschichtet sein, beispielsweise um eine Korrosionsfestigkeit des Rotors zu gewährleisten. Auf diese Weise kann dann auf eine zusätzliche Ummantelung bzw. Kapselung des Rotors, beispielsweise mit einem Mantel aus rostfreiem Stahl verzichtet werden. Dadurch wird zum einen die Fertigung des Rotors vereinfacht. Zum anderen werden auch die magnetischen Eigenschaften des Rotors verbessert, da eine dünne Beschichtung das Magnetfeld weniger stark beeinträchtigt, als ein zusätzlicher Mantel, welcher den Rotor an seinem Außenumfang umgibt.

Die Lagerfläche kann vorzugsweise auch an einer axialen Verlängerung des Rotors ausgebildet sein. Diese axiale Verlängerung, welche in axialer Richtung, d. h. in Richtung der Drehachse des Rotors an zumindest einer Stirnseite vorsteht, bildet somit eine Rotorwelle, ist jedoch bevorzugt einstückig ebenfalls aus Magnetmaterial mit dem Rest des Rotors ausgebildet. Ein solcher Abschnitt dient bevorzugt der Lagerung des Rotors, insbesondere in radialer Richtung, und dient ggf. dazu, die von dem Rotor anzutreibenden Komponenten, beispielsweise ein Pumpenlaufrad, mit dem Rotor zu verbinden. D. h. dieser vorstehende Abschnitt übernimmt die Funktion einer Rotorwelle.

Nachfolgend wird die Erfindung beispielhaft anhand der beigefügten Figuren beschrieben. In diesen zeigt:
- Fig. 1: eine Seitenansicht eines Rotors eines Pumpenaggregates gemäß einer ersten Ausführungsform der Erfindung,
- Fig. 2: eine Seitenansicht eines Rotors eines Pumpenaggregates gemäß einer zweiten Ausführungsform der Erfindung,
- Fig. 3: eine Seitenansicht eines Rotors eines Pumpenaggregates gemäß einer dritten Ausführungsform der Erfindung,
- Fig. 4a: eine Seitenansicht eines Rotors eines Pumpenaggregates gemäß einer vierten Ausführungsform der Erfindung,
- Fig. 4b: eine axiale Draufsicht auf den Rotor gemäß Fig. 4a in Richtung des Pfeils A,
- Fig. 5a: eine Seitenansicht eines Rotors eines Pumpenaggregates gemäß einer fünften Ausführungsform der Erfindung,
- Fig. 5b: eine axiale Draufsicht auf den Rotor gemäß Fig. 5a in Richtung des Pfeils A,
- Fig. 6: eine Seitenansicht eines Rotors eines Pumpenaggregates gemäß einer sechsten Ausführungsform der Erfindung,
- Fig. 7: eine schematische Schnittansicht eines Rotors mit Beschichtung gemäß einer bevorzugten Ausführungsform der Erfindung, und
- Fig. 8: eine schematische Ansicht eines Rotors gemäß einer weiteren Ausführungsform der Erfindung.

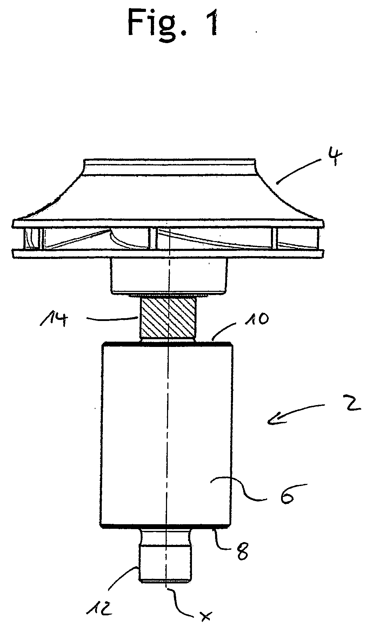

Die Figuren 1 - 6 zeigen Rotoren von Pumpenaggregaten, bei welchen unterschiedliche Bereiche beschichtet sind. Der Rotor des Pumpenaggregates besteht aus dem eigentlichen Rotor 2, welcher den Rotor eines Elektromotors, welcher als Antriebsmotor für das Pumpenaggregat dient, bildet. An den Rotor 2 ist das Laufrad 4 des Pumpenaggregates angesetzt, sodass es von dem Rotor 2 angetrieben wird bzw. sich gemeinsam mit dem Rotor 2 dreht. Der Rotor 2 besteht aus einem zentralen Abschnitt 6, welcher sich im zusammengesetzten Zustand des Antriebsmotors im Inneren eines umgebenden Stators (hier nicht gezeigt) befindet. Von den axialen Stirnseiten 8 und 10 des zentralen Abschnittes 6 erstrecken sich axiale wellenförmige Vorsprünge 12 und 14. Die Vorsprünge 12 und 14 sind einstückig mit dem zentralen Abschnitt 6 des Rotors aus Magnetmaterial ausgebildet und erstrecken sich konzentrisch zur Längs- bzw. Drehachse X des Rotors. Sie übernehmen die Funktion der Rotorwelle und dienen der Lagerung und im Falle des Vorsprunges 14 der Verbindung mit dem Laufrad 4. Der Rotor 2 ist vollständig und einstückig aus Magnetmaterial, beispielsweise Ferrit gefertigt. Um der Oberfläche des Rotors 2 eine gewünschte Verschleißfestigkeit bzw. Härte zu geben, welche insbesondere den direkten Einsatz als Lagerfläche ermöglicht, ist erfindungsgemäß eine Beschichtung der Oberfläche des Magnetmaterials vorgesehen. Diese Beschichtung kann an unterschiedlichen Bereichen ausgebildet sein.

In der ersten Ausführungsform gemäß Fig. 1 ist der umfängliche Abschnitt des axialen Vorsprungs 14 mit der Beschichtung vorgesehen. Der axiale Vorsprung 14 bildet so eine Radiallagerung für den Rotor 2. Da das Laufrad 4 fest mit dem Rotor 2 über den Vorsprung 14 verbunden ist, übernimmt dieser Radiallagerung auch die Lagerfunktion für das Laufrad 4.

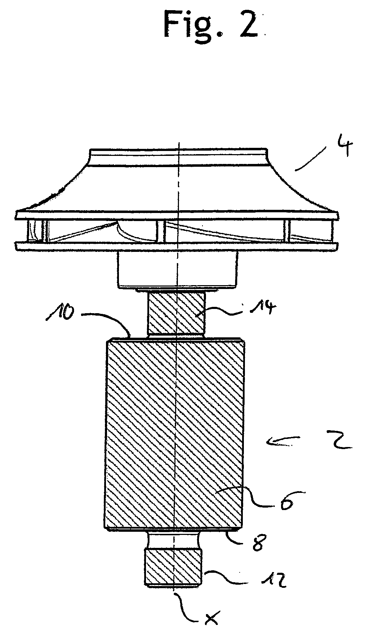

Gemäß der zweiten Ausführungsform, welche in Fig. 2 gezeigt ist, ist neben dem Umfangsbereich bzw. dem Außenumfang des Vorsprunges 14 auch der Außenumfang des Vorsprunges 12 sowie der Außenumfang des zentralen Abschnittes 6 des Rotors 2 mit einer verschleißfesten Beschichtung versehen. Bei dieser Ausführungsform dient sowohl der Außenumfang des Vorsprungs 14 als auch der Außenumfang des Vorsprungs 12 als Radiallager. Der Außenumfang des zentralen Abschnittes 6 ist ebenfalls mit der verschleißfesten Beschichtung beschichtet, um dem Rotor auch in diesem Bereich eine erforderliche Verschleißfestigkeit zu geben, welche erforderlich sein kann, um den zentralen Abschnitt 6 des Rotors vor Korrosion und Beschädigung durch umgebende Medien zu schützen, insbesondere wenn es sich um einen nasslaufenden Motor handelt.

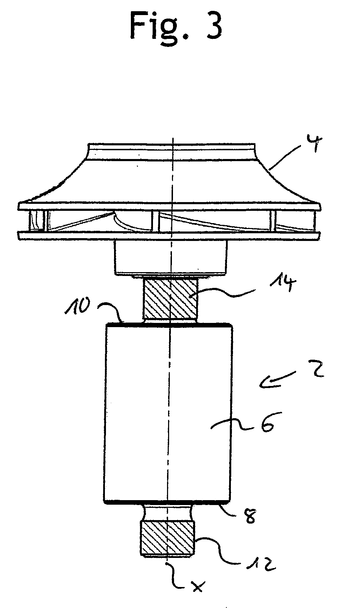

Bei der Ausführungsform gemäß Fig. 3 sind nur die Umfangsflächen der Vorsprünge 12 und 14 beschichtet, welche wie vorangehend beschrieben als Radiallager dienen.

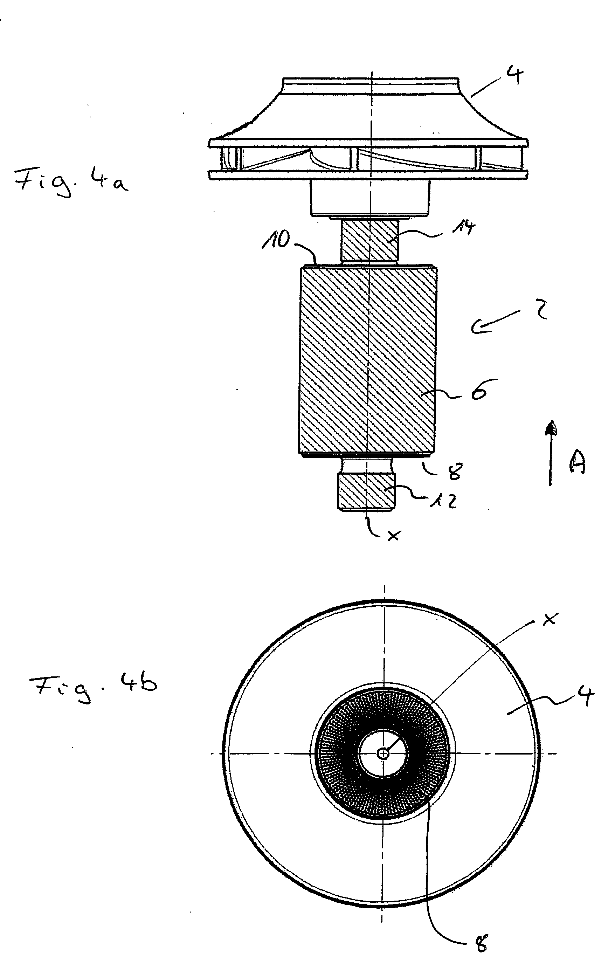

Die Ausführungsform gemäß Fig. 4a und 4b entspricht im Wesentlichen der Ausführungsform gemäß Fig. 2 mit dem Unterschied, dass bei der Ausführungsform gemäß Fig. 4, wie in Fig. 4b zu sehen ist, auch die axiale Stirnseite 8 des Rotors 2 mit der verschleißfesten Beschichtung versehen ist. So kann die axiale Stirnseite des zentralen Abschnittes 6 des Rotors 2 als Axiallagerfläche dienen.

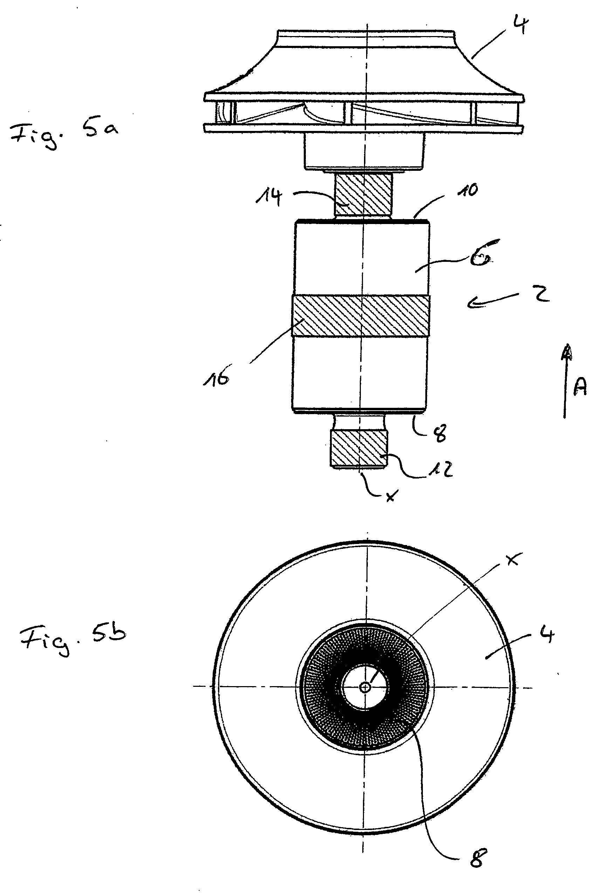

Die Ausführungsformen gemäß Fig. 5a und 5b entspricht im Wesentlichen der Ausführungsform gemäß Fig. 4 mit dem Unterschied, dass die Außenumfangsfläche des zentralen Abschnittes 6 des Rotors 2 nicht vollständig mit der verschleißfesten Beschichtung versehen ist. Bei der Ausführungsform gemäß Fig. 5 ist, wie in Fig. 5a zu sehen ist, nur ein ringförmiger Abschnitt 16 am Außenumfang des zentralen Abschnittes 6 mit der Beschichtung versehen. Dieser ringförmige Abschnitt 16 ist in axialer Richtung X im Mittelbereich des zentralen Abschnittes 6 gelegen. Er kann dort eine radiale Notlagerfläche bilden und den Rotor vor Verschleiß schützen, falls er mit dem umgebenden Stator oder einem umgebenden Spaltrohr in Kontakt kommen sollte.

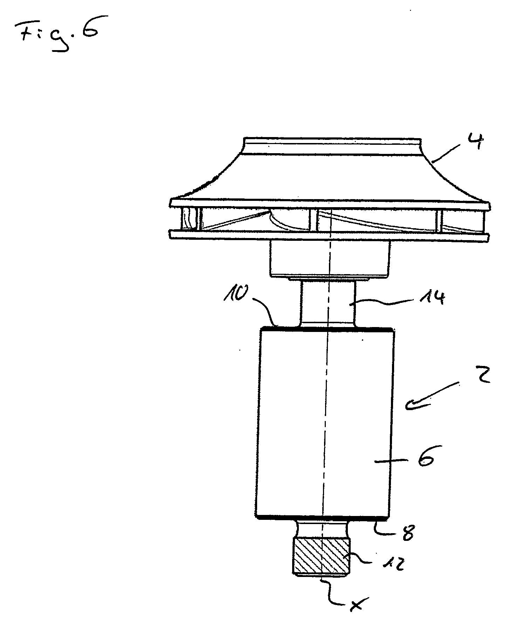

Die Ausführungsform gemäß Fig. 6 entspricht im Wesentlichen der Ausführungsform gemäß Fig. 1 mit dem Unterschied, dass bei der Ausführungsform gemäß Fig. 6 nicht der Vorsprung 14, sondern der Vorsprung 12 an seiner Umfangswandung mit der verschleißfesten Beschichtung versehen ist. So dient hier der Vorsprung 12 als Radiallager für den Rotor 2.

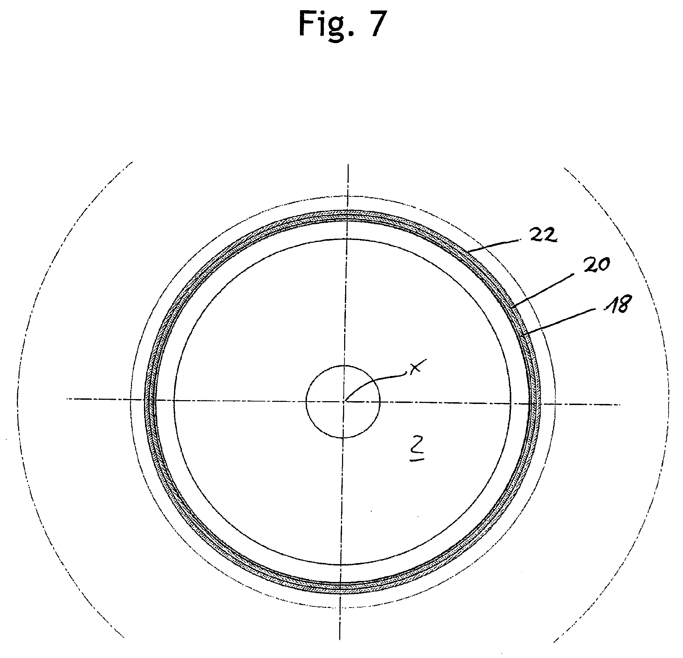

Anhand von Fig. 7 wird nun der Aufbau der vorangehend genannten Beschichtung näher erläutert, wobei zu verstehen ist, dass alle die zuvor benannten Bereiche, welche mit einer verschleißfesten Beschichtung versehen sein können, in dieser Weise ausgebildet sein können.

Fig. 7 zeigt eine Schnittansicht durch einen beschichteten Bereich des Rotors 2. Der Rotor 2 ist aus einem Magnetmaterial ausgebildet, beispielsweise Ferrit oder Neodymium, wobei in dem Magnetmaterial durch geeignete Magnetisierung die Rotorpole ausgebildet sind. Die Außenumfangsfläche des Rotors 2, ist zunächst mit einer inneren Schicht 18 beschichtet, welche elektrisch leitfähig ist. Diese Schicht kann beispielsweise aus CrN (Chromnitrid) bestehen. Auf diese innere Schicht 18 ist außen eine Mittel- bzw. Zwischenschicht 20 aufgebracht, welche eine Tragschicht für die äußere Schicht 22 bildet. Die Zwischenschicht 20 ist beispielsweise aus CrCN gebildet und kann im PVD-Verfahren auf die elektrisch leitfähige innere Schicht 18 aufgebracht sein. Die elektrisch leitfähige innere Schicht 18 ermöglicht so zunächst einmal die Anwendung der gängigen Beschichtungsverfahren, um geeignete Hartstoffschichten auf das Magnetmaterial des Rotors 2 aufzubringen. Das Magnetmaterial würde sich allein durch die üblichen Verfahren nicht beschichten lassen. Als äußere Schicht 22 ist auf die Zwischenschicht 20 dann die hoch verschleißfeste Schicht ausgebildet, welche als Lagerfläche für den Rotor 2 dienen kann. Die äußere Schicht 22 besteht dabei bevorzugt aus DLC (diamond-like carbon), CrN (Chromnitrid) oder TiAlN (Titanaluminiumnitrid). Diese Schicht weist eine hohe Verschleißfestigkeit und eine geringe Reibung auf und bietet somit günstige Lagereigenschaften beispielsweise in Paarung mit einer umgebenden Lagerhülse aus Al₂O₃.

Anstatt schrittweise mehrere Schichten nacheinander aufzubringen, können auch eine oder mehrere Schichten mit gestuften bzw. sich ändernden Eigenschaften in radialer Richtung ausgebildet sein. So kann ein gestufter oder fließender Übergang zwischen den einzelnen Materialien bzw. Materialeigenschaften erreicht werden. Bei dieser Ausgestaltung sind die einzelnen Schichten nicht klar voneinander getrennt, sondern gehen gestuft oder fließend ineinander über.

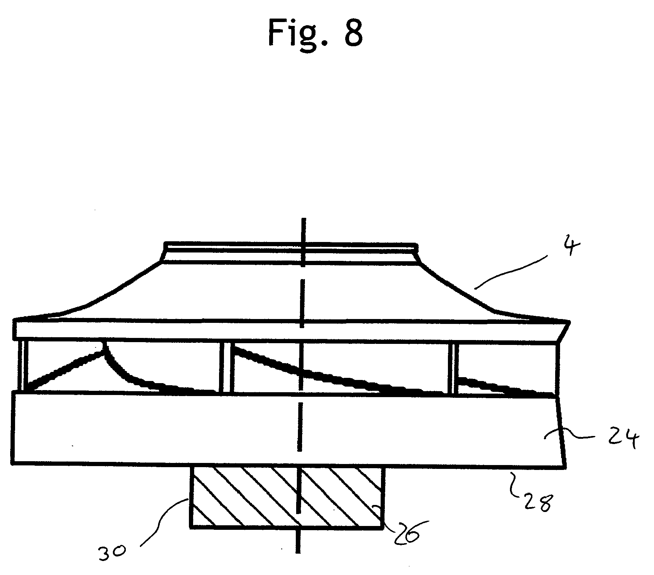

Fig. 8 zeigt ein Laufrad 4 mit einem direkt angesetzten magnetischen Rotor 24 eines Elektromotors. Bei diesem handelt es sich um einen Rotor 24 mit axial gerichtetem magnetischem Fluss, d. h. der zugehörige Stator liegt dem Rotor 24 stirnseitig und nicht umfänglich gegenüber. Auch dieser Rotor 24 ist einstückig aus Magnetmaterial ausgebildet. Der Rotor 24 weist eine axiale Verlängerung 26 auf, welche einen Wellenstumpf für die radiale Führung des Rotors 24 und des angesetzten Laufrades 4 bildet. Als Lagerflächen sind bei diesem Rotor 24 die die axiale Verlängerung 26 umgebende ringförmige Stirnseite 28 und die Umfangsfläche 30 der Verlängerung 26 ausgebildet. Die Stirnseite 28 bildet eine Axiallagerfläche und die Umfangsfläche 30 eine Radiallagerfläche. Die Stirnseite 28 und die Umfangsfläche 30 sind dabei in der zuvor beschriebenen Weise mit einer verschleißfesten Beschichtung versehen.

### Bezugszeichenliste

- 2: - Rotor
- 4: - Laufrad
- 6: - zentraler Abschnitt
- 8, 10: - axiale Stirnseiten
- 12, 14: - axiale Vorsprünge
- 16: - ringförmiger Abschnitt
- 18: - innere Schicht
- 20: - Zwischenschicht
- 22: - äußere Schicht
- 24: - Rotor
- 26: - axiale Verlängerung
- 28: - Stirnseite
- 30: - Umfangsfläche
- X: - Längs- bzw. Drehachse
- A: - axiale Richtung

## Patentansprüche

1. Rotor (2), welcher Teil eines Elektromotors ist, aus einem elektrisch nicht leitfähigen Magnetmaterial, **dadurch gekennzeichnet, dass** zumindest ein Oberflächenabschnitt des Magnetmaterials mit einer verschleißfesten Beschichtung (18, 20, 22) versehen ist, wobei die Beschichtung (18, 20, 22) zumindest zweischichtig ausgebildet ist und eine innere (18), direkt auf das Magnetmaterial aufgebrachte Schicht, welche elektrisch leitfähig ist, sowie eine äußere Schicht (22) aus einem hoch verschleißfesten Material aufweist.

2. Rotor nach Anspruch 1, **dadurch gekennzeichnet, dass** die äußere Schicht (22) aus einem Material mit geringer Reibung gebildet ist.

3. Rotor (2) nach Anspruch 1 oder 2, **dadurch gekennzeichnet, dass** er vollständig aus Magnetmaterial gefertigt ist.

4. Rotor (2) nach einem der vorangehenden Ansprüche, **dadurch gekennzeichnet, dass** er Teil eines elektrischen Antriebsmotors eines Pumpenaggregates ist.

5. Rotor (2) nach einem der vorangehenden Ansprüche, **dadurch gekennzeichnet, dass** die Beschichtung (18, 20, 22) aus DLC, CrN und/oder TiAlN gebildet ist.

6. Rotor nach einem der vorangehenden Ansprüche, **dadurch gekennzeichnet, dass** die Beschichtung (18, 20, 22) dreischichtig mit einer mittleren Tragschicht (20) ausgebildet ist.

7. Rotor nach einem der vorangehenden Ansprüche, **dadurch gekennzeichnet, dass** die innere Schicht (18) zumindest teilweise aus CrN oder einem korrosionsfesten Metall gebildet ist.

8. Rotor nach einem der vorangehenden Ansprüche, **dadurch gekennzeichnet, dass** die äußere Schicht (22) zumindest teilweise aus DLC, CrN oder TiAlN gebildet ist.

9. Rotor nach einem der vorangehenden Ansprüche, **dadurch gekennzeichnet, dass** zumindest ein Abschnitt (8; 12; 14) des Rotors (2), welcher eine Lagerfläche bildet, mit der Beschichtung versehen ist.

10. Rotor nach Anspruch 9, **dadurch gekennzeichnet, dass** die Lagerfläche an einer axialen Verlängerung (12, 14) des Rotors (2) ausgebildet ist.

## Claims

1. A rotor (2) which is part of an electric motor, of an electrically nonconductive magnetic material, **characterised in that** at least one surface section of the magnetic material is provided with a wear-resistant coating (18, 20, 22), wherein the coating (18, 20, 22) is designed in an at least two-layered manner and comprises an inner layer (18) which is deposited directly onto the magnetic material which is electrically conductive, as well as an outer layer (22) of a highly wear-resistant material.

2. A rotor according to claim 1, **characterised in that** the outer layer (22) is of a material with low friction.

3. A rotor (2) according to claim 1 or 2, **characterised in that** it is manufactured completely of magnetic material.

4. A rotor (2) according to one of the preceding claims, **characterised in that** it is part of an electric drive motor of a pump assembly.

5. A rotor (2) according to one of the preceding claims, **characterised in that** the coating (18, 20, 22) is formed of DLC, CrN and/or TiAlN.

6. A rotor according to one of the preceding claims, **characterised in that** the coating (18, 20, 22) is designed in a three-layered manner with a middle carrier layer (20).

7. A rotor according to one of the preceding claims, **characterised in that** the inner layer (18) is formed at least partly of CrN or a corrosion-resistant metal.

8. A rotor according to one of the preceding claims, **characterised in that** the outer layer (22) at least partly is formed from DLC, CrN or TiAlN.

9. A rotor according to one of the preceding claims, **characterised in that** at least one section (8; 12; 14) of the rotor (2) which forms a bearing surface, is provided with the coating.

10. A rotor according to claim 9, **characterised in that** the bearing surface is formed on an axial extension (12, 14) of the rotor (2).

## Revendications

1. Rotor (2), faisant partie d'un moteur électrique, en matériau magnétique électriquement non conducteur, **caractérisé en ce qu'**au moins une portion de surface du matériau magnétique est pourvue d'un revêtement (18, 20, 22) résistant à l'usure, le revêtement (18, 20, 22) étant constitué d'au moins deux couches et présentant une couche interne (18) électriquement conductrice, appliquée directement sur le matériau magnétique, et une couche externe (22) en matériau à résistance élevée à l'usure.

2. Rotor selon la revendication 1, **caractérisé en ce que** la couche externe (22) est constituée d'un matériau à faible frottement.

3. Rotor (2) selon la revendication 1 ou 2, **caractérisé en ce qu'**il est entièrement réalisé en matériau magnétique.

4. Rotor (2) selon l'une des revendications précédentes, **caractérisé en ce qu'**il fait partie d'un moteur d'entraînement électrique d'un groupe motopompe.

5. Rotor (2) selon l'une des revendications précédentes, **caractérisé en ce que** le revêtement (18, 20, 22) est constitué de DLC, CrN et/ou TiAlN.

6. Rotor selon l'une des revendications précédentes, **caractérisé en ce que** le revêtement (18, 20, 22) est constitué de trois couches avec une couche de support médiane (20).

7. Rotor selon l'une des revendications précédentes, **caractérisé en ce que** la couche interne (18) est constituée au moins en partie de CrN ou d'un métal résistant à la corrosion.

8. Rotor selon l'une des revendications précédentes, **caractérisé en ce que** la couche externe (22) est constituée au moins en partie de DLC, CrN ou TiAlN.

9. Rotor selon l'une des revendications précédentes, **caractérisé en ce qu'**au moins une partie (8; 12; 14) du rotor (2), qui forme une surface d'appui, est munie du revêtement.

10. Rotor selon la revendication 9, **caractérisé en ce que** la surface d'appui est formée sur une extension axiale (12, 14) du rotor (2).
